# EUROPÄISCHE PATENTSCHRIFT

(11) **EP 1 483 087 B1**
(45) Veröffentlichungstag und Bekanntmachung des Hinweises auf die Patenterteilung: **20.08.2008**
(21) Anmeldenummer: 02792604.7
(22) Anmeldetag: 21.11.2002
(51) Int. Cl.: B25F 5/02, B23D 51/03

(54) **Handstichsägemaschine**
MANUAL SABER SAW MACHINE
SCIE SAUTEUSE A MAIN

(30) Priorität: 09.02.2002 DE 10205378
(43) Veröffentlichungstag der Anmeldung: 08.12.2004
(73) Patentinhaber: ROBERT BOSCH GMBH, 70442 Stuttgart (DE)
(72) Erfinder: SAEGESSER, Daniel, CH-4900 Langenthal (CH); FELDER, Sacha, CH-4513 Langendorf SO (CH)
(86) Internationale Anmeldenummer: PCT/DE2002/004285
(87) Internationale Veröffentlichungsnummer: WO 2003/066287

(56) Entgegenhaltungen:
- DE-U- 20 100 952
- US-A- 3 353 573
- US-A- 4 614 037

## Beschreibung

### Stand der Technik

Die vorliegende Erfindung geht aus von einer Handstichsägemaschine nach dem Oberbegriff des Anspruchs 1.

Eine deratine Handstichsagemachine it aus der US B353 573 behannt.

Es sind schon Handstichsägemaschinen bekannt, in deren Gehäuse ein oder mehrere Reservesägeblätter deponierbar sind. Bisherige Sägeblattdepots sind in die Gehäuse integriert und sind mit einem Deckel verschließbar. Nach Öffnen des Deckels sind die im Depot enthaltenen Sägeblätter zeitaufwendig und umständlich entnehmbar. Dadurch besteht wegen der scharfen Sägezähne erhöhte Verletzungsgefahr.

### Vorteile der Erfindung

Die vorliegende Erfindung mit den Merkmalen des Anspruchs 1 hat den Vorteil, daß die Reservesägeblätter gemeinsam mit einem Sägeblattbehälter schnell auffindbar sind und dieser schnell und bequem entnehmbar ist. Außerdem ist durch die Art der Unterbringung der Sägeblätter in dem Sägeblattbehälter deren Entnahme schnell, bequem und ohne Verletzungsgefahr möglich. Dadurch ist ein Sägeblattwechsel besonders schnell und unkompliziert zu bewerkstelligen.

Dadurch, daß das Griffstück des Sägeblattbehälters einen kapselartigen Bereich bildet, der unten eine Öffnung trägt und daran anschließend nach oben und hinten offen ist, ist der Sägeblattbehälter sicher greifbar, wobei die Reservesägeblätter leicht entnehmbar sind bzw. der Sägeblattbehälter einfach und bequem neu bestückbar ist.

Dadurch, daß der Sägeblattbehälter aus elastischem Kunststoff besteht, ist er leicht und dämpft Vibrationen sowohl der Halterung im Gehäuse als auch der eingelegten Reservesägeblätter.

Dadurch, daß der Sägeblattbehälter mittels einer am Gehäuse angeordneten Überrastfeder form- und kraftschlüssig im Gehäuse arretierbar ist, sind die Reservesägeblatter bequem und schnell zugänglich sowie sicher gegen Verlieren untergebracht.

Dadurch, daß die Stichsäge eine Niederhaltefeder enthält, die sich vorgespannt gegen die im Sägeblattbehälter befindlichen Sägeblätter abstützt, sind diese gegen Vibrationen bzw. Klappern gesichert.

Dadurch, daß die Niederhaltefeder im Gehäuse gehaltert ist und von oben in den Sägeblattbehälter hineinragt, ist der Sägeblattbehälter leicht einsteckbar und entnehmbar.

Dadurch, daß die Niederhaltefeder und die Überrastfeder jeweils als Blattfeder ausgestaltet sind, sind sie besonders einfach und kostengünstig herstellbar und montierbar sowie leicht und robust.

Dadurch, daß der Sägeblattbehälter an seinem Ende unter den einzulegenden Sägeblättern eine Blattfeder trägt, die von Hand anhebbar ist, sind nach deren Anheben die Sägeblätter besonders bequem und gegen Verletzung gesichert entnehmbar.

Dadurch, daß am Ende des Sägeblattbehälters zwei gegenüberliegende Nuten zum Eintritt der seitlichen Nocken des Einspannendes des Sägeblatts vorgesehen sind, liegen die Reservesägeblätter axial gesichert und schwingungsgedämpft als Stapel im Sägeblattbehälter und im Gehäuse der Handstichsägemaschine.

### Zeichnung

Nachstehend ist die vorliegende Erfindung anhand einer zugehörigen Zeichnung näher erläutert.

Es zeigen
Figur 1 eine räumliche Hinteransicht einer erfindungsgemäßen Stichsägemaschine,
Figur 2 einen Ausschnitt gemäß Figur 1 mit herausgenommenem Sägeblattbehälter,
Figur 3 einen Ausschnitt schräg von hinten unten mit eingestecktem Sägeblattbehälter bei entnommener oberer Gehäuseschale,
Figur 4 eine Hinteransicht des Sägeblattbehälters,
Figur 5 den Sägeblattbehälter mit Reservesägeblatt im Gehäuse eingesteckt,
Figur 6 den Sägeblattbehälter schräg von unten
Figur 7 eine vergrößerte Unteransicht des Sägeblattbehälters mit Arretierfeder.

### Ausführungsbeispiel

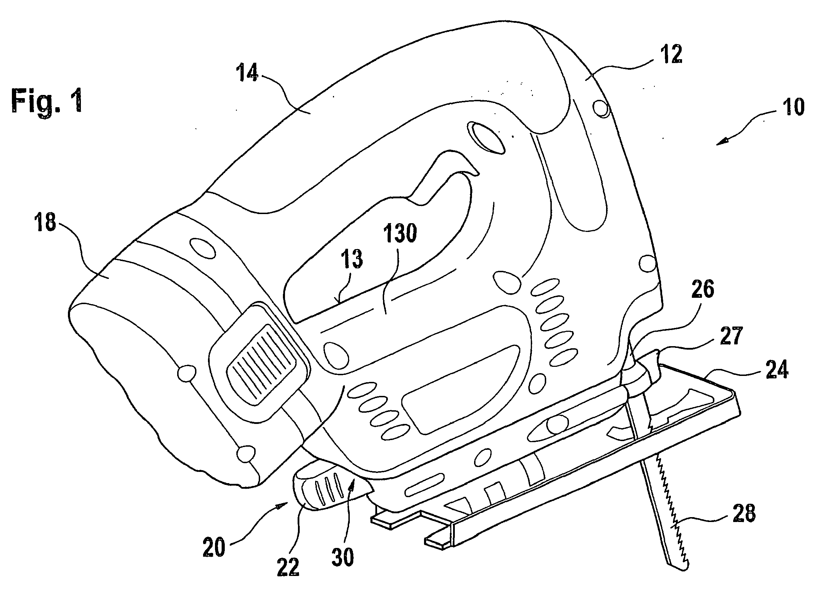

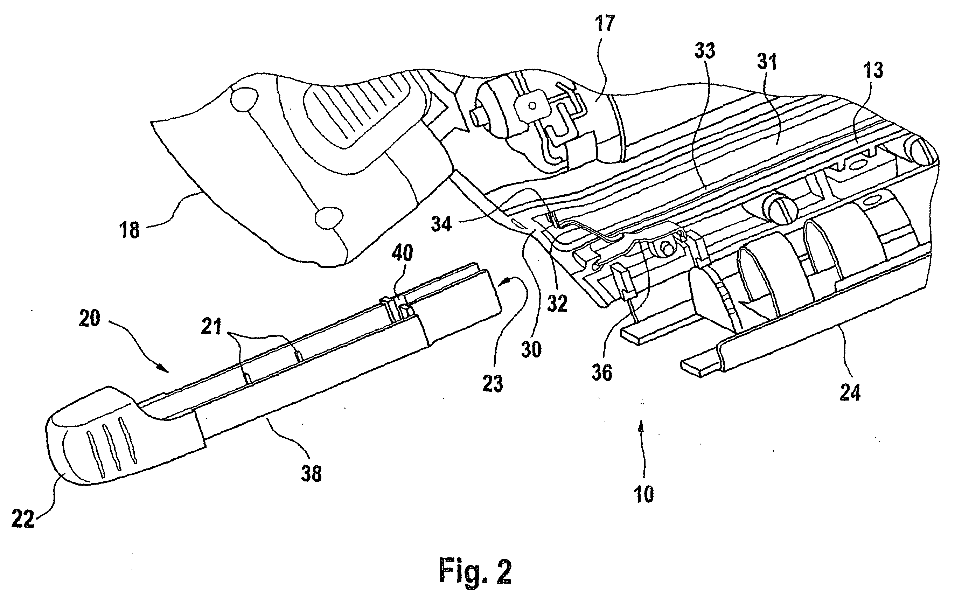

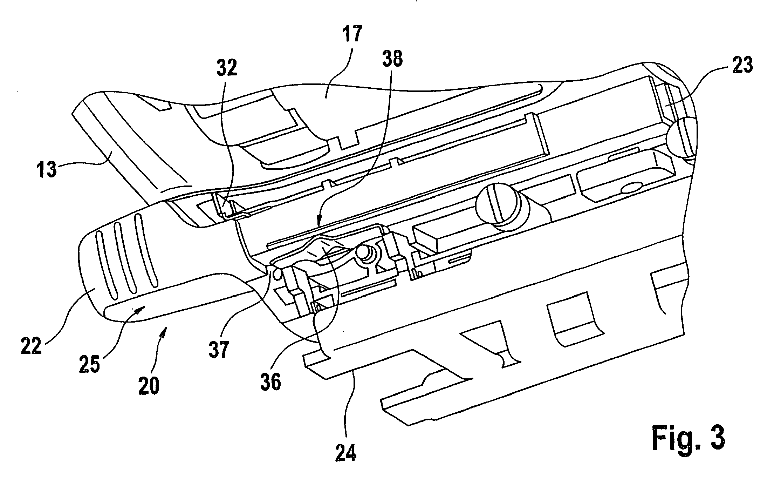

Figur 1 zeigt eine akkubetriebene Handstichsägemaschine 10 mit einem Gehäuse 12, das oben einen Handgriff 14 hat. Dieser hat auf seiner Unterseite eine Taste 16 zur Betätigung eines nicht dargestellten Ein- und Ausschalters für die Stromversorgung eines Motors 17 (Figuren 2, 3), der zwischen den Gehäuseschalen 13, 130 des Gehäuses 12 gehaltert ist.

An seinem hinteren Ende trägt das Gehäuse 12 lösbar einen auswechselbaren Akkupack 18. Außerdem ragt unterhalb des Akkupacks 18 ein länglicher Sägeblattbehälter 20 mit seinem Handgriff 22 aus dem Gehäuse 12 nach hinten hervor. Der Sägeblattbehälter 20 ist längs in eine Öffnung 30 des Gehäuses 12 einschiebbar und entlang einem nutartigen Kanal 31, verstärkt durch Längsrippen 33, lösbar unverlierbar gehaltert.

Das Gehäuse 12 ist unten schwenkbar an einer Grundplatte 24 gelagert, die als Stützfuß bei mobilem Sägen dient.

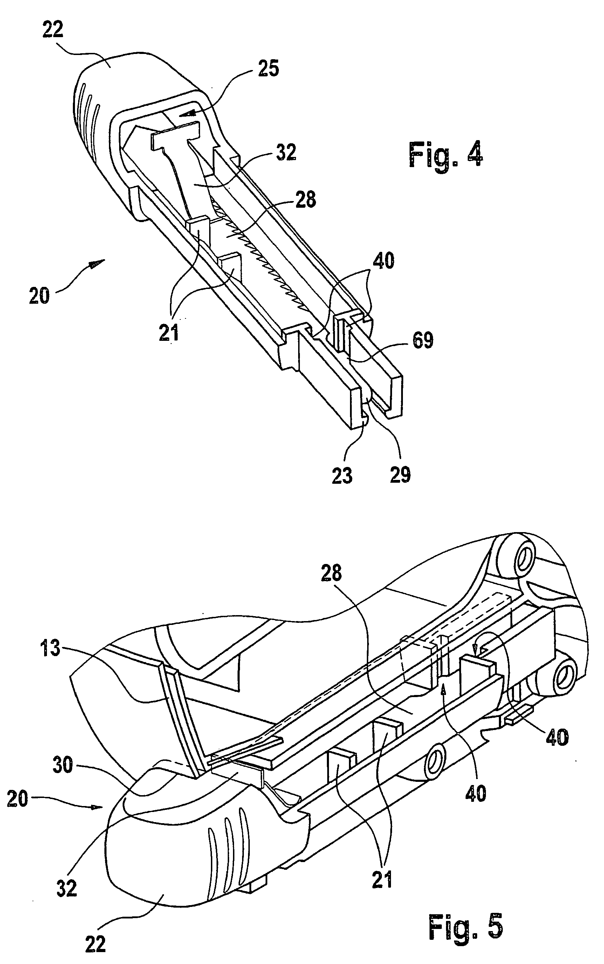

Figur 2 zeigt einen Ausschnitt des unteren Bereichs der linken Gehäuseschale 13 von der Teilungsebene her gesehen mit herausgezogenem Sägeblattbehälter 20. Dessen Positionsrippen 21 zur Lagesicherung, insbesondere als Stapel, eingelegter Sägeblätter 28 (Figuren 4 bis 7) und symmetrisch einander gegenüberliegende Einlegenuten 40 zur Halterung der seitlichen Nasen 69 des Einspannendes 29 des Sägeblatts 28 sind erkennbar.

Der Sägeblattbehälter 20 bildet im Anschluß an den kapselartigen Handgriff 22 in Längsrichtung nach vorn ein oben offenes, U-förmiges Profil, das an seinem Ende 23 in Axialrichtung offen ist.

Außerdem ist die Längsanordnung des Kanals 31 mit den Längsrippen 33 und mit einer Öffnung 30 am hinteren Ende der Gehäuseschale 13 erkennbar, die eine Negativkontur des Griffstücks 22 bildet und dieses im eingesetzten Zustand dicht umgreift. Außerdem sind eine Niederhaltefeder 32 sowie eine Arretierfeder 36 erkennbar, die beide jeweils als Blattfeder ausgeführt und im betriebsbereiten Zustand in Schlitzen 34 bzw. 37 der Gehäuseschale 13 unverlierbar klemmbar gehäusefest angeordnet sind.

Der Sägeblattbehälter 20 weist an seiner Unterseite eine Vertiefung 38 auf, in die ein Vorsprung der Arretierfeder 36 einrasten kann und damit den Sägeblattbehälter 20 unverlierbar im Gehäuse 12 festhält.

Die Arretierfeder 36 drückt den Sägeblattbehälter 20 beim Eingriff in die Vertiefung 38 seines Bodens nach oben und hält diesen vibrationsfrei im Gehäuse 12 fest.

Figur 3 zeigt die Innenansicht der linken Gehäusehalbschale und 13 daß das Griffstück 22 des Sägeblattbehälters 20 nach unten hin durch eine Öffnung 25 durchbrochen ist. Der Bedienende kann durch Eingriff eines Fingers oder des Daumens in die Vertiefung 25 das Griffstück 22 sicher erfassen und herausnehmen sowie den entnommenen Sägeblattbehälter 20 griffsicher in der Hand halten.

Figur 4 zeigt die Einzelheit des Sägeblattbehälters 20 mit zum Betrachter hinweisendem Ende 23. Darin liegt das Sägeblatt 28 auf seiner oberen Flachseite abgestützt durch eine Niederhalte-Feder 32 und damit gegen Vibrationen und Klappern geschützt auf den Boden des Sägeblattbehälters 20 nach unten gedrückt.

Der Sägeblattbehälter 20 trägt an seiner rechten Längswand senkrechte Positionrippen 21, die quer in den Innenraum des Sägeblattbehälters 20 ragen, und an denen sich der Rücken des Sägeblatts 28 abstützt. Mit seinem Einspannende 29 liegt das Sägeblatt 28 im hinteren Ende 23 des Sägeblattbehälters 20. Dabei liegen die seitlichen Nasen 69 formschlüssig in gegenüberliegenden Nuten 40 mit geringem Spiel ein.

Alle Stichsägeblätter mit T-Einspannprofil und gegenüberliegenden Nasen 69 haben gleiche Abmessungen bezüglich Sägeblattrücken und Einspannende 29. So haben alle derart ausgestalteten Sägeblätter 28 eine gleiche, gesicherte vibrationsfreie Position nach dem Einlegen in den Sägeblattbehälter 20.

Das Sägeblatt 28 ragt mit seiner Spitze in die untere Öffnung 25 des Griffstücks 22 frei hinein. Damit kann es - nach Herausnehmen des Sägeblattbehälters 20 - durch manuellen Eingriff durch die Öffnung 25 gegen die Kraft der Niederhaltefeder 32 nach oben angehoben werden und anschließend das angehobene Einspannende 29 besonders bequem aus dem hinteren Ende 23 des Sägeblattbehälters 20 enmommen werden.

Figur 5 zeigt den in der linken Gehäuseschale 13 eingeschobenen Sägeblattbehälter 20 schräg von oben hinten. Dabei wird nochmals besonders deutlich die Position der Niederhalte-Feder 32, der Positionsrippen 21 und des Sägeblatts 28 erkennbar.

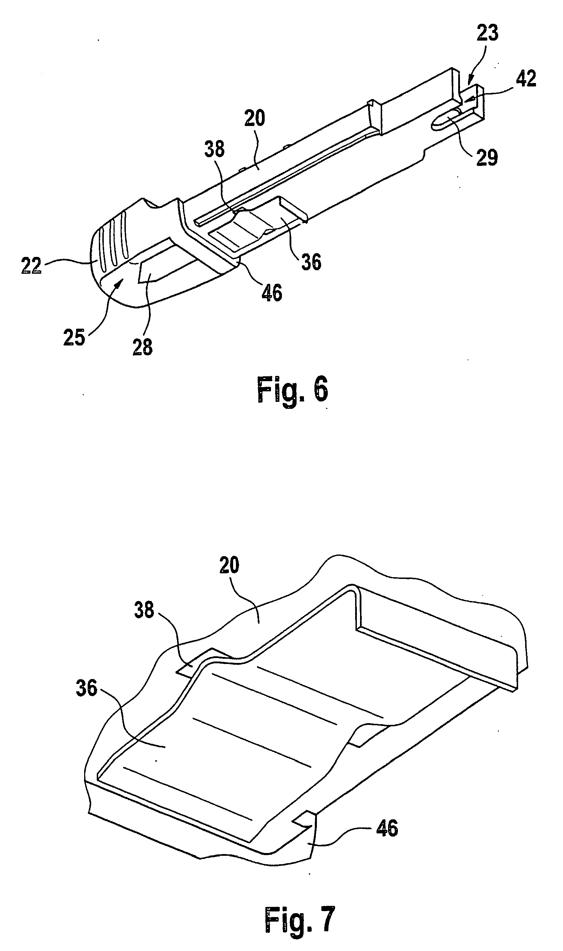

Figur 6 zeigt den Sägeblattbehälter 20 schräg von hinten unten, wobei die Spitze des Sägeblatts 28 in die Öffnung 25 hineinragend erkennbar ist. Deutlich wird außerdem die Anordnung der an sich gehäusefest angeordneten Arretierfeder 36 mit ihrem nach oben ragenden Vorsprung, der in eine Ausnehmung 38 ragt. Über die in den vorhergehenden Figuren gezeigten Ausführungsbeispiele hinaus hat der Sägeblattbehälter 20 an seinem Ende 23 an seiner Unterseite eine Ausnehmung 42, durch die das Einspannende 29 des Sägeblatts 28 besonders gut greifbar und sicher entnehmbar ist.

Deutlich wird auch die Kante 46 zwischen Griffstück 22 und dem Einsteckbereich des Sägeblattbehälters 20, die als Anschlag beim Einsetzen des Sägeblattbehälters 20 in das Gehäuse 12 dient.

Figur 7 zeigt einen vergrößerten Ausschnitt der Unteransicht des Sägeblattbehälters 20 auf dessen Unterseite mit der Vertiefung 38, in die ein dachförmger Vorsprung der blattfederartigen Arretierfeder 36 einrasten kann.

Der Sägeblattbehälter 20 ist vollständig aus der Handstichsägemaschine 10 entnehmbar und außerhalb der Handstichsägemaschine besonders einfach zu handhaben, sowohl beim Entnehmen aber auch Bestücken mit Reservesägeblättern.

## Patentansprüche

1. Handstichsägemaschine (10) mit einem Gehäuse (12), das einen Motor (17), ein Getriebe mit einer Hubstange (26) zur Auf- und Abbewegung eines daran befestigten Sägeblatts (28) und mit einer das Gehäuse (12) tragenden Fuß-platte (24), wobei das Gehäuse (12) eine Öffnung (30) auf-weist, in die ein Sägeblattbehälter (20) eingeteckt ist, **dadurch gekennzeichnet, dass** der Sägeblattbehälter (20), magazinartig länglich, *wie ein Schub-kasten ausgestaltet ist, in den Sägeblätter (28) stapelartig einlegbar sind und dass der Sägeblattbehälter (20)* lösbar, unverlierbar am Gehäuse (12) ange-ordnet ist, wobei ein als Handgriff (22) dienender Teil des Sägeblattbehälters (20) *stummelartig so über die Außenkontur des Gehäuses (12) nach außen herausragt, dass er von Hand beguem, picher greifbar in Längsrichtung zur Entnahme von oder zur Bestückung mit Sägeblättern (28) heransnehm bar und einschiebbar ist.*

2. Handstichsägemaschine nach Anspruch 1, **dadurch gekennzeichnet, dass** der Sägeblattbehälter (20) nach hinten aus dem gehäme hervorragt.

3. Handstichsägemaschine nach Anspruch 1, **dadurch gekennzeichnet, dass** der Handgriff (22) des Sägeblattbehälters (20) einen zumindest seitlich, insbesondere oben geschlossenen, kapselartigen Bereich bildet und dass ein anschließender, länglicher Teil ein hinten offenes, u-förmiges Profil ist.

4. Handstichsägemaschine nach Anspruch 3, **dadurch gekennzeichnet, dass** die Sägeblätter (28) vom Sägeblattbehälter (20) vollständig umgriffen werden

5. Handstichsägemaschine nach Anspruch 4, **dadurch gekennzeichnet, dass** die Sägeblätter mit Ihrer Spitze in den Handgriff (22) des Sägeblattbehälters (20) ragen.

6. Handstichsägemaschine nach Anspruch 1 bis 5, **dadurch gekennzeichnet, dass** der Sägeblattbehälter (20) aus Kunststoff besteht.

7. Handstichsägemaschine nach Anspruch 1 bis 6, **dadurch gekennzeichnet, dass** der Sägeblattbehälter (20) im Gehäuse (12) unverlierbar mittels einer gehäusefest angeordneten Überrastfeder (36) festhaltbar ist, die in eine zugeordnete Vertiefung des Sägeblatt-Behälters (20) eingreifen kann.

8. Handstichsägemaschine nach Anspruch 1 bis 7, **dadurch gekennzeichnet, dass** sie eine Niederhalte-Feder (32) enthält, die das im Sägeblattbehälter (20) befindliche Sägeblatt (28) vibrationssicher beaufschlagt.

9. Handstichsägemaschine nach Anspruch 8, **dadurch gekennzeichnet, dass** die Niederhalte-Feder (32) im Gehäuse (12) gehaltert ist und von oben in den Sägeblattbehälter (20) ragt, vorzugsweise sich vorgespannt darin nach unten abstütz.

10. Handstichsägemaschine nach Anspruch 8 oder 9, **dadurch gekennzeichnet, dass** die Niederhaltefeder (32) und die Überrastfeder (36) je als Blattfeder ausgestaltet ist

11. Handstichsägemaschine nach Anspruch 1 bis 10, **dadurch gekennzeichnet, dass** der Sägeblattbehälter (20) an seinem Ende (23) unter den einzulegenden Sägeblättern (28) eine Blattfeder trägt, die von Hand anhebbar ist, so dass damit die Sägeblätter (28) - insbesondere bei entnommenem Sägeblattbehälter (20) - anhebbar und bequem entnehmbar sind.

12. Handstichsägemaschine nach Anspruch 1 bis 11, **dadurch gekennzeichnet, dass** der Sägeblattbehälter (20) im Kontrast zur Farbe des Gehäuses (12), insbesondere signalfarben, gefärbt ist

## Claims

1. Manual sabre saw machine (10) with a housing (12) which has a motor (17), a gear mechanism with a stroke rod (26) for the up-and-down movement of a saw blade (28) fastened thereto, and with a baseplate (24) which bears the housing (12), wherein the housing (12) has an opening (30) into which a saw blade container (20) is inserted, **characterized in that** the saw blade container (20), which is elongate in the manner of a magazine, is configured as a drawer into which saw blades (28) can be placed in a stacked manner, and **in that** the saw container (20) is arranged in a releasable, captive manner on the housing (12), with a part of the saw blade container (20) that serves as a handle (22) projecting outwards in a stub-like manner over the outer contour of the housing (12) in such a manner that it can be easily and securely grasped by hand and can be taken out and pushed in in the longitudinal direction in order to remove or to be provided with saw blades (28).

2. Manual sabre saw machine according to Claim 1, **characterized in that** the saw blade container (20) projects to the rear out of the housing.

3. Manual sabre saw machine according to Claim 1, **characterized in that** the handle (22) of the saw blade container (20) forms a capsule-like region which is closed at least laterally, in particularly upwards, and **in that** an adjoining, elongate part has a rearwardly open, U-shaped profile.

4. Manual sabre saw machine according to Claim 3, **characterized in that** the saw blades (28) are completely enclosed by the saw blade container (20).

5. Manual sabre saw machine according to Claim 4, **characterized in that** the tips of the saw blades protrude into the handle (22) of the saw blade container (20).

6. Manual sabre saw machine according to Claims 1 to 5, **characterized in that** the saw blade container (20) is composed of plastic.

7. Manual sabre saw machine according to Claims 1 to 6, **characterized in that** the saw blade container (20) can be secured captively in the housing (12) by means of an overlatching spring (36) which is fixed on the housing and can engage in an associated depression of the saw blade container (20).

8. Manual sabre saw machine according to Claims 1 to 7, **characterized in that** it contains a holding-down spring (32) which acts in a vibration-proof manner upon the saw blade (28) located in the saw blade container (20).

9. Manual sabre saw machine according to Claim 8, **characterized in that** the holding-down spring (32) is secured in the housing (12) and protrudes from above into the saw blade container (20), and is preferably downwardly supported in a prestressed manner therein.

10. Manual sabre saw machine according to Claim 8 or 9, **characterized in that** the holding-down spring (32) and the overlatching spring (36) are each configured as a leaf spring.

11. Manual sabre saw machine according to Claims 1 to 10, **characterized in that** the saw blade container (20) bears a leaf spring at its end (23) under the saw blades (28) to be inserted, which leaf spring can be raised by hand such that the saw blades (28) - in particular when the saw blade container (20) is removed - can therefore be lifted and easily be removed.

12. Manual sabre saw machine according to Claims 1 to 11, **characterized in that** the saw blade container (20) is coloured in contrast to the colour of the housing (12), in particular in signal colours.

## Revendications

1. Scie sauteuse à main (10) comportant un boîtier (12) logeant un moteur (17), une transmission avec une tige d'entraînement (26) assurant le mouvement de montée et de descente d'une lame de scie (28) fixée à cette tige ainsi qu'un plateau d'appui (24) portant le boîtier (12),
le boîtier (12) ayant une ouverture (30) dans laquelle est engagé un réceptacle à lames de scie (20),
**caractérisée en ce que**
le réceptacle à lames de scie (20) est allongé en forme de magasin, comme un tiroir, dans lequel les lames de scie peuvent être empilées et le réceptacle à lames de scie (20) est installé de manière détachable mais imperdable sur le boîtier (12),
une partie du réceptacle à lames de scie (20) servant de poignée (22) en dépassant du contour extérieur du boîtier (12) comme un embout que l'on peut prendre facilement et sûrement à la main, pour l'extraire dans la direction longitudinale ou pour le garnir de lames de scie (28) ou le rentrer par coulissement.

2. Scie sauteuse à main selon la revendication 1,
**caractérisée en ce que**
le réceptacle à lames de scie (20) dépasse de l'arrière du boîtier.

3. Scie sauteuse à main selon la revendication 1,
**caractérisée en ce que**
la poignée (22) du réceptacle à lames de scie (20) comporte une zone au moins latérale en forme de capsule, notamment fermée sur le dessus et en ce une partie allongée, adjacente, est un profil en forme de U, ouvert vers l'arrière.

4. Scie sauteuse à main selon la revendication 3,
**caractérisée en ce que**
les lames de scie (28) sont complètement entourées par le réceptacle à lames de scie (20).

5. Scie sauteuse à main selon la revendication 4,
**caractérisée en ce que**
les lames de scie viennent en saillie par leur pointe dans la poignée (22) du réceptacle à lames de scie.

6. Scie sauteuse à main selon les revendications 1 à 5,
**caractérisée en ce que**
le réceptacle à lames de scie (20) est en matière plastique.

7. Scie sauteuse à main selon les revendications 1 à 6,
**caractérisée en ce que**
le réceptacle à lames de scie (20) est fixé de manière imperdable dans le boîtier (12) à l'aide d'un ressort d'enclipsage (36) solidaire du boîtier, et qui peut pénétrer dans une cavité correspondante du réceptacle à lames de scie (20).

8. Scie sauteuse à main selon les revendications 1 à 7,
**caractérisée en ce qu'**
elle comporte un ressort d'enfoncement (32) qui sollicite la lame de scie (28) placée dans le réceptacle à lames de scie (20) pour la bloquer en vibration.

9. Scie sauteuse à main selon la revendication 8,
**caractérisée en ce que**
le ressort d'enfoncement (32) est monté dans le boîtier (12) et dépasse par-dessus dans le réceptacle à lames de scie (20) en s'appuyant de préférence de façon précontrainte vers le bas.

10. Scie sauteuse à main selon la revendication 8 ou 9,
**caractérisée en ce que**
le ressort d'enfoncement (32) et le ressort d'enclipsage (36) sont réalisés chacun sous la forme d'un ressort-lame.

11. Scie sauteuse à main selon les revendications 1 à 10,
**caractérisée en ce que**
le réceptacle à lames de scie (20) porte à son extrémité (23), un ressort-lame sous les lames de scie (28) à recevoir, ce ressort-lame pouvant se soulever à la main de façon qu'il puisse ainsi soulever et extraire de manière pratique les lames de scie (28) notamment lorsque le réceptacle à lames de scie (20) est sorti.

12. Scie sauteuse à main selon les revendications 1 à 11,
**caractérisée en ce que**
le réceptacle à lames de scie (20) est teinté avec une teinte en contraste avec celle du boîtier (12) notamment une teinte de signalisation.
